# EUROPÄISCHE PATENTSCHRIFT

(11) **EP 1 034 670 B1**
(45) Veröffentlichungstag und Bekanntmachung des Hinweises auf die Patenterteilung: **18.12.2002**
(21) Anmeldenummer: 98954102.4
(22) Anmeldetag: 25.11.1998
(51) Int. Cl.: H04Q 7/22, H04Q 7/32

(54) **VERFAHREN ZUR VERWALTUNG VON INFORMATIONEN AUF IDENTIFIKATIONSKARTEN**
METHOD FOR MANAGING INFORMATION ON IDENTIFICATION CARDS
PROCEDE DE GESTION DE DONNEES SUR DES CARTES D'IDENTIFICATION

(30) Priorität: 25.11.1997 CH 271697; 25.02.1998 WO PCT/CH98/00076
(43) Veröffentlichungstag der Anmeldung: 13.09.2000
(73) Patentinhaber: Swisscom Mobile AG, 3050 Bern (CH)
(72) Erfinder: BOUQUET, Hanspeter, CH-3032 Hinterkappelen (CH); HEUTSCHI, Walter, CH-3303 Jegensdorf (CH); RITTER, Rudolf, CH-3052 Zollikofen (CH); MARTSCHITSCH, Andreas, CH-3360 Herzogenbuchsee (CH)
(74) Vertreter: BOVARD AG - Patentanwälte
(86) Internationale Anmeldenummer: CH9800503
(87) Internationale Veröffentlichungsnummer: WO99027721

(56) Entgegenhaltungen:
- EP-A- 0 562 890
- EP-A- 0 789 500
- US-A- 5 630 159
- US-A- 5 742 910

## Beschreibung

Die vorliegende Erfindung betrifft ein Verfahren und Vorrichtungen zur Verwaltung von Informationen auf Identifikationskarten, insbesondere betrifft sie ein Verfahren und Vorrichtungen um auf Initiative von Kunden kundenspezifische Informationen auf Identifikationskarten zu verwalten, die als SIM-Karten ausgeführt sind.

Neben einer Identifikationsnummer, Sicherheitsdaten und Benutzerprofilen können auf einer Identifikationskarte auch Informationen gespeichert werden, welche vom betreffenden Benutzer eingegeben werden. Oft sind allerdings die Benutzerschnittstellen der Endgeräte, in welchen die Identifikationskarten eingesetzt werden, nicht sehr benutzerfreundlich, beispielsweise sind deren Anzeigen sehr klein und können gleichzeitig nur wenige Informationen darstellen, so dass die Eingabe und Verwaltung von Informationen für einen Benutzer mühsam und aufwendig ist. Zudem müssen beim Ersetzen einer Karte solche kundenspezifischen Informationen vom Benutzer auf mühsame Weise wieder eingegeben und auf der Ersatzkarte abgespeichert werden. Der Benutzer kann sich beispielsweise mit seiner Identifikationskarte in einem Kommunikationsnetz als Teilnehmer identifizieren oder er kann sich bei einem anderen Dienstanbieter mit seiner Identifikationskarte als Kunde identifizieren.

In der Patentschrift US 5 630 159 werden ein Verfahren und ein System beschrieben, welche ermöglichen, dass die persönlichen Vorzugswerte eines Benutzers von mehreren Anwendungsvorrichtungen für Parameter der Benutzerschnittstellen dieser Anwendungsvorrichtungen, beispielsweise Bildschirmkonfigurationen eines Computers oder Sitz- und Rückspiegelpositionen eines Automobils, automatisch in dafür geeigneten Gebervorrichtungen, beispielsweise eine Chipkarte oder eine zentrale Datenbank, gespeichert werden, so dass Anwendungsvorrichtungen, die mit einer Gebervorrichtung verbunden werden, die gespeicherten Vorzugswerte zum Setzen der betreffenden Parameter ihrer Benutzerschnittstellen verwenden können. Gemäss der in der Patentschrift US 5 630 159 offenbarten Lehre muss ein Benutzer seine Vorzugswerte nur einmal setzen, da die in einer Gebervorrichtung gespeicherten Vorzugswerte zum Setzen oder Herleiten von Vorzugswerten für weitere Anwendungsvorrichtungen verwendet werden können.

In der Patentanmeldung EP 789 500 A2 werden ein Verfahren und eine Vorrichtung beschrieben, welche ermöglichen, dass durch Übermittlung einer Änderungsmitteilung mittels einer SMS-Nachricht von einer Dienstzentrale über ein Mobilfunknetz an eine SIM-Karte eines Endgeräts, auf der SIM-Karte die Berechtigung zur Kontaktaufnahme zwischen dem Endgerät und einem oder mehreren Mitgliedern einer Gruppe von Teilnehmern des Mobilfunknetzes verändert werden kann.

Es ist eine Aufgabe dieser Erfindung, ein neues und besseres Verfahren vorzuschlagen, welches es einem Kunden erleichtert, seine auf einer Identifikationskarte, die als SIM-Karte ausgeführt ist, gespeicherten kundenspezifischen Informationen zu verwalten, und welches es insbesondere ermöglicht, dass beim Ersetzen dieser Identifikationskarte diese Informationen vom Kunden nicht wieder eingegeben werden müssen.

Gemäss der vorliegenden Erfindung werden diese Ziele insbesondere durch die Elemente des kennzeichnenden Teils des Anspruchs 1 erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass die genannten kundenspezifischen Informationen von einem Informationssystem erfasst und in diesen Kunden zur Verfügung gestellten Speicherplätzen einer zentralen Datenbank gespeichert werden, in welcher kundenspezifische Informationen für eine Vielzahl von Kunden gespeichert sind, dass die kundenspezifischen Informationen in der Datenbank vom Informationssystem auf Grund von Instruktionen, die über ein Kommunikationsnetz empfangen werden, verwaltet werden, und dass die kundenspezifischen Informationen vom Informationssystem über ein Kommunikationsnetz auf die sich in Endgeräten befindenden Identifikationskarten übertragen werden, zum Beispiel mittels speziellen Kurzmeldungen wie USSD- oder SMS-Meldungen über ein Mobilfunknetz, oder mittels e-mail-Meldungen als Nutzdaten oder in Kurzmeldungen über ein Mobilfunknetz. Dies hat insbesondere den Vorteil, dass die kundenspezifischen Informationen beispielsweise in Fällen von durch Diebstahl oder anderweitigen Verlust abhanden gekommenen Karten zur Verfügung stehen und zur Abspeicherung auf Ersatzkarten übertragen werden können. Zudem hat die Verwaltung der kundenspezifischen Informationen mittels Instruktionen, die an das Informationssystem übermittelt werden, den Vorteil, dass einem Kunden verschiedene Benutzerschnittstellen, insbesondere komfortablere Benutzerschnittstellen, zur Verfügung gestellt werden können, um diese Instruktionen einzugeben.

Vorzugsweise werden die kundenspezifischen Informationen und die Instruktionen zur Verwaltung dieser kundenspezifischen Informationen vom Informationssystem von mindestens gewissen Kunden mittels Internetdiensten über das Internet entgegengenommen. Dies hat den Vorteil, dass den Kunden eine äusserst benutzerfreundliche Benutzeroberfläche zur Eingabe und Verwaltung ihrer kundenspezifischen Informationen angeboten werden kann.

Vorzugsweise können die Instruktionen, insbesondere wenn sich die Identifikationskarte in einem Mobilgerät befindet, vom Informationssystem zusätzlich in speziellen Kurzmeldungen über ein Mobilfunknetz empfangen werden. Dies hat den Vorteil, dass Kunden, die beispielsweise im betreffenden Zeitpunkt keinen Zugang zu einem komfortablen Endgerät am Internet haben, kundenspezifische Informationen direkt mittels ihres Mobilgeräts verwalten können, wobei sichergestellt werden kann, dass die kundenspezifischen Informationen in der zentralen Datenbank und in der Identifikationskarte aktualisiert werden.

In einer Ausführungsvariante können die kundenspezifischen Informationen zudem direkt von den genannten sich in Endgeräten befindenden Identifikationskarten über ein Kommunikationsnetz erfasst werden, beispielsweise von einem Mobilgerät mittels speziellen Kurzmeldungen über ein Mobilnetz, zum Beispiel in einem GSM-Netz mittels SMS- oder USSD- Meldungen. Dies hat beispielsweise den Vorteil, dass kundenspezifische Informationen, die ohne Abspeicherung in der zentralen Datenbank auf der Identifikationskarte gespeichert wurden, zum Beispiel nur lokal im betreffenden Endgerät ohne Zuhilfenahme des erfindungsgemässen Verfahrens, nachträglich in die Datenbank geladen werden können. Dabei können neben kundenspezifischen Informationen, die auf Initiative eines betreffenden Kunden auf die Identifikationskarte gespeichert wurden, auch andere kundenspezifische Informationen wie beispielsweise Benutzerprofile, Sicherheitsdaten, Identifikationsnummern, etc. erfasst und in der Datenbank gespeichert werden.

In einer bevorzugten Ausführungsvariante sind mindestens gewisse kundenspezifische Informationen privat und können nur auf Identifikationskarten des betreffenden Kunden übertragen und gespeichert werden während andere kundenspezifische Informationen gruppenspezifisch sind und auf Identifikationskarten der betreffenden Gruppe von Kunden übertragen und gespeichert werden können. Dies ermöglicht, dass eine Gruppe von Kunden, beispielsweise eine Firma oder ein Verein, die selben kundenspezifischen Informationen, beispielsweise eine Telefonliste der Firmenmitarbeiter respektive der Vereinsmitglieder, auf ihre Identifikationskarten übertragen und abspeichern können.

In einer bevorzugten Ausführungsvariante können für Kunden in der Datenbank mehrere Sätze von kundenspezifischen Informationen gespeichert und verwaltet werden, wobei jeweils ein Satz von einem Kunden mittels der genannten Instruktionen selektiert und auf seine Identifikationskarte übertragen und gespeichert werden kann. Dies hat den Vorteil, dass ein Kunde verschiedene Sätze von kundenspezifischen Informationen auf sehr einfache und schnelle Weise auf seine Identifikationskarte laden kann. Zum Beispiel kann er während der Arbeitszeit eine Telefonliste der Firmenmitarbeiter und in seiner Freizeit eine private Telefonliste auf seine Identifikationskarte laden.

Die Erfindung betrifft auch ein Verfahren, um auf Identifikationskarten auf Initiative von Kunden gespeicherte kundenspezifische Informationen bezüglich aktuellen Werten, zum Beispiel neue Rufnummern oder neue Versionen von ausführbaren Softwareprogrammen, von entsprechenden Informationen in einem Kommunikationssystem zu aktualisieren, wobei die genannten kundenspezifischen Informationen von einem Informationssystem erfasst und in diesen Kunden zur Verfügung gestellten Speicherplätzen einer zentralen Datenbank gespeichert werden, die Werte der in der Datenbank gespeicherten genannten kundenspezifischen Informationen vom genannten Informationssystem mit den genannten aktuellen Werten aktualisiert und die aktualisierten kundenspezifischen Informationen auf die sich in Endgeräten befindenden genannten Identifikationskarten übertragen werden. Dabei kann das genannte Informationssystem die genannten kundenspezifischen Informationen direkt von den genannten sich in Endgeräten befindenden Identifikationskarten über ein Kommunikationsnetz erfassen, beispielsweise mittels über ein Mobilfunknetz übertragenen speziellen Kurzmeldungen, die genannten kundenspezifischen Informationen können von mindestens gewissen Kunden mittels Internetdiensten verwaltet und an das genannte Informationssystem übertragen werden, und das genannte Informationssystem kann die genannten aktualisierten kundenspezifischen Informationen über ein Kommunikationsnetz auf die sich in Endgeräten befindenden Identifikationskarten übertragen, beispielsweise mittels über ein Mobilfunknetz übertragenen speziellen Kurzmeldungen.

Nachfolgend wird eine Ausführung der vorliegenden Erfindung anhand eines Beispieles beschrieben. Das Beispiel der Ausführung wird durch die einzige beigelegte Figur illustriert:

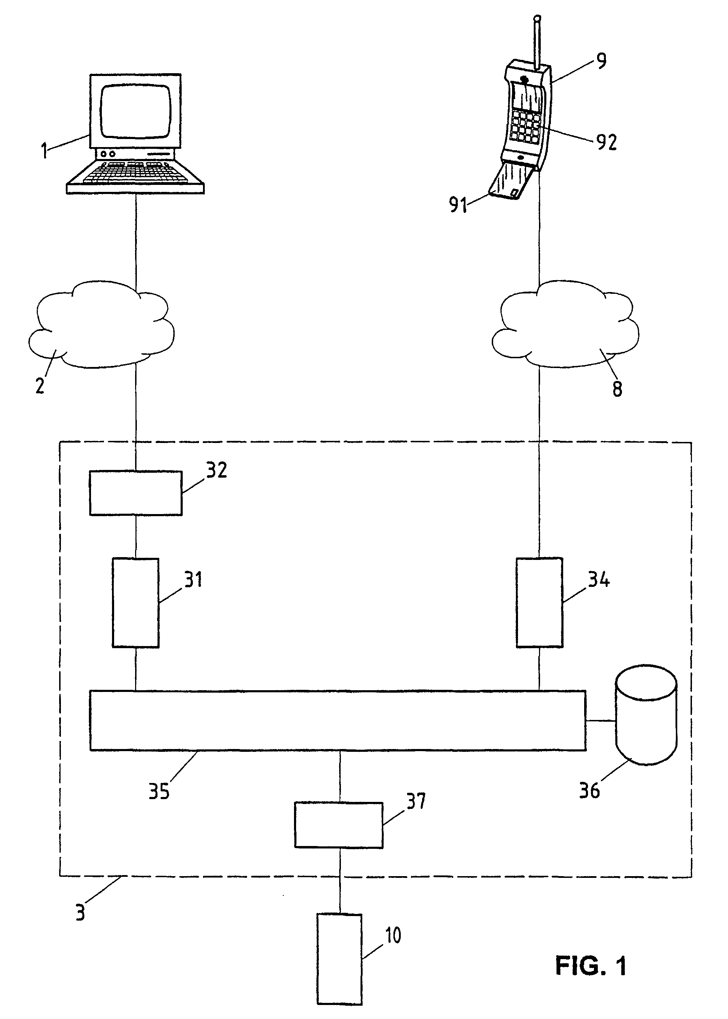

Figur 1 zeigt ein Übersichtsdiagramm eines Informationssystems, welches eine Datenbank umfasst und mit dem Internet sowie einem weiteren Kommunikationsnetz, beispielsweise ein Mobilfunknetz, verbunden ist.

In Fig. 1 verweist die Bezugsziffer 3 auf ein Informationssystem, dessen Umfang mittels einer gestrichelten Linie dargestellt ist und welches mehrere Komponenten umfasst, die im folgenden Text näher erläutert werden. Grundsätzlich können alle vom Informationssystem 3 umfassten Komponenten als programmierte Softwaremodule auf einem gemeinsamen Computer, beispielsweise ein handelsüblicher Server, der mit dem Internet 2 und einem Mobilfunknetz 8 verbunden werden kann, implementiert werden, der Fachmann kennt allerdings praktische Richtlinien und Regeln, die ihm helfen zu entscheiden ob beispielsweise ein Firewall-Modul 31, ein Web-Server 32, ein Identifikationskarten-Dienstzentrum 34, ein Verwaltungsmodul 35, eine Datenbank 36 oder ein Gateway 37 besser auf einem separaten, eigenen Computer implementiert werden sollten. Falls die Komponenten auf mehreren Computern implementiert werden, können die Computer beispielsweise über TCP/IP-Verbindungen miteinander verbunden werden.

In einer zentralen Datenbank 36 des Informationssystems 3, werden Kunden, die beispielsweise Teilnehmer in einem Mobilfunknetz 8 sind, zum Beispiel in einem GSM-Netz oder in einem UMTS-Netz, und die mindestens eine Identifikationskarte 91 besitzen, die als SIM-Karte 91 ausgeführt ist - vorzugsweise eine Chipkarte, welche über einen Prozessor und Speichermittel verfügt -, Speicherplätze zur Verfügung gestellt, in denen sie kundenspezifische Informationen speichern können, welche auf ihre Initiative auf ihre SIM-Karte 91 gespeichert werden. Die Datenbank 36 wird beispielsweise vom Betreiber des Mobilfunknetzes 8 betrieben und verwaltet und umfasst beispielsweise ein bekanntes Datenbankmanagementsystem, welches wie oben erwähnt gemeinsam mit anderen Komponenten des Informationssystems 3 oder separat auf einem Computer, beispielsweise ein handelsüblicher Server, mit Zugang auf Festplattenspeicher realisiert ist. Die den Kunden zur Verfügung gestellten Speicherplätze können beispielsweise gegen eine monatliche Gebühr an die Kunden vermietet werden, wobei der Preis je nach benötigtem Speicherplatz berechnet oder ein fester Preis für einen reservierten Speicherbereich von bestimmter Grösse angesetzt werden kann. Die Verrechnung der Speicherplätze für die Kunden kann auch als Teil eines entsprechenden Dienstes erfolgen.

Die kundenspezifischen Informationen können vom Kunden zum Beispiel mittels Internetdiensten eingegeben und verwaltet werden. Der Kunde greift mittels einem Endgerät 1, beispielsweise mit einem PC, einem Laptop oder Palmtop Computer, über ein Kommunikationsnetz, beispielsweise ein Fixnetz oder ein Mobilfunknetz, auf das Internet 2 zu und wählt die entsprechenden Dienste, beispielsweise mittels einem handelsüblichen Browser, auf dem Web-Server 32 des Informationssystems 3 an, welches mittels einem dem Fachmann bekannten Firewall-Modul 31 von unberechtigten Zugriffen und Attacken über das Internet geschützt ist. Zudem ist der Zugang auf die Dienste des Web-Servers 32 mittels speziellen Kundennummern, beispielsweise die Seriennummer seiner Identifikationskarte, und/oder Passwörtern gesichert, welche beispielsweise vom Kunden in einer Internetauthorisierungsseite eingegeben werden müssen. Ein interessierter Kunde kann sich beispielsweise mit seinem Endgerät 1, 9 für diese Internetdienste registrieren, zum Beispiel mit seinem Mobilgerät mittels speziellen Kurzmeldungen oder mit einem PC über einen Internetregistrationsdienst. Nach erfolgreicher Registrierung kann dem betreffenden Kunden vom Informationssystem ein Passwort und beispielsweise auch die URL-Adresse für den Zugang zu diesen Internetdiensten mittels einer Kurzmeldung auf sein Mobilgerät 9 übermittelt werden. Der Web-Server 32 ist beispielsweise ein Java-Server der mittels Java-Applets direkt auf die Datenbank 36 zugreift und entsprechend dem gewählten Dienst bestimmte Funktionen ausführt oder der Aufträge, beispielsweise Client-Server-mässig, über das Verwaltungsmodul 35 abwickelt, welches dann auf die Datenbank 36 zugreift und entsprechend dem gewählten Dienst bestimmte Funktionen ausführt.

Dem Kunden können über diese Internetdienste Zugang auf mehrere Sätze von kundenspezifischen Informationen ermöglicht werden, von denen jeweils einer auf seine aktive Identifikationskarte 91 gespeichert sein kann. Mittels den Internetdiensten kann der Kunde seine verschiedenen Sätze, auf die er berechtigten Zugriff hat, beispielsweise mit deren Namen auflisten und selektieren oder einen neuen Satz definieren und einfügen. Nachdem er einen bestimmten Satz von kundenspezifischen Informationen selektiert hat, kann er die darin enthaltenen kundenspezifischen Informationen auflisten und sortieren, bestimmte Einträge selektieren und ändern, oder löschen, oder zusätzliche Informationen, das heisst neue Einträge, einfügen. Es kann auch vorgesehen sein, dass diese Dienste auf Antrag des Kunden in einem Administrationszentrum durch berechtigte Mitarbeiter des Betreibers des Informationszentrums 3 ausgeführt werden, indem diese Mitarbeiter beispielsweise direkt auf die obengenannten Dienste zugreifen können, ohne über das Internet gehen zu müssen. Auf diesem Wege ist es für diese Mitarbeiter auch möglich, auf Antrag der Kunden kundenspezifische Informationen einzugeben, welche von den Kunden selber nicht eingegeben werden können, die aber auf diesem Weg in die Datenbank 36 gelangen und von dort dann auch auf entsprechende SIM-Karten übertragen werden können. Auf Beispiele von solchen und anderen kundenspezifischen Informationen wird später in diesem Text noch ausführlicher eingegangen werden.

Typischerweise ist ein Satz von kundenspezifischen Informationen privat, das heisst er kann nur vom betreffenden Kunden, der ihn definiert und eingefügt hat, auf seine Identifikationskarte geladen werden. Mittels den oben erwähnten Internetdiensten ist es zudem aber möglich einen selektierten Satz auch für eine Gruppe von Kunden freizugeben (Closed User Group, CUG), das heisst ein solcher Satz kann auf die ldentifikationskarten von dieser Gruppe von Kunden geladen werden. Beispielsweise kann jedes Mitglied dieser Gruppe mit einer Identifizierung, zum Beispiel mit dessen Rufnummer, für einen betreffenden Satz als berechtigt eingetragen werden oder jedem Mitglied dieser Gruppe kann die Berechtigung einen betreffenden Satz zu laden über ein entsprechendes Passwort gewährt werden, welches beispielsweise vom Kunden, der diesen Satz definiert hat, mittels den Internetdiensten eingegeben wird. Auf ähnliche Weise kann es möglich sein mehreren Kunden das Recht zu geben einen bestimmten Satz von kundenspezifischen Informationen zu verwalten. Es ist auch möglich Sätze von Informationen ohne Passwortschutz, insbesondere zum Laden auf eine Identifikationskarte, allen Kunden zugänglich zu machen.

Die kundenspezifischen Informationen können zusätzlich direkt vom Endgerät 9, in welchem sich die Identifikationskarte 91 befindet, über ein Kommunikationsnetzwerk in der Datenbank 36 verwaltet werden. Zum Beispiel indem entsprechende Befehle über die Eingabemittel des Endgeräts, beispielsweise ein Mobilgerät 9 mit einer SIM-Karte 91, entgegengenommen werden und mittels speziellen Kurzmeldungen über ein Mobilfunknetz 8, insbesondere ein GSM-Netz oder ein UMTS-Netz, ins Informationssystem 3 übertragen werden. Der Kunde kann beispielsweise die auf seiner Identifikationskarte 91 gespeicherten kundenspezifischen Informationen auflisten, einen bestimmten Eintrag mit der dazugehörigen Eintragsnummer selektieren und Befehle zum Sortieren, Ändern, Löschen, oder zusätzlichen Einfügen von Informationen eingeben. Es kann auch möglich sein das oben erwähnte Passwort für den Zugriff zu den Internetdiensten mit einem Befehl vom Mobilgerät 9 aus zu ändern zudem können auch allgemeine andere Informationen, die den Kunden, insbesondere seinen Setup im Mobilfunknetz 8, betreffen und die in der Datenbank 36 gespeichert sind, angefordert, durchgesehen und, je nach Art dieser Informationen, verwaltet werden. An dieser Stelle sollte klargestellt werden, dass für den Zugriff auf die Datenbank 36 mit einem Endgerät 9, in welchem sich eine Identifikationskarte befindet, vom Kunden kein Passwort eingegeben werden muss da er durch die Identifikationskarte, beispielsweise anhand einer dort gespeicherten und übertragenen IMSI (International Mobile Subscriber Identity), identifiziert werden kann. Das Passwort wird für den Zugriff über die beschriebenen Internetdienste verwendet und kann beispielsweise vom Kunden auch benutzt werden, wenn ihm seine Identifikationskarte abhanden gekommen ist und er seine kundenspezifischen Daten verwalten und/oder auf seine neue Ersatzkarte laden möchte.

Im Informationssystem 3 werden die speziellen Kurzmeldungen von einem Identifikationskarten-Dienstzentrum 34, beispielsweise ein Short Message Service Centre (SSC) 34, empfangen und zur Ausführung eines entsprechenden speziellen Diensts, beispielsweise an das Verwaltungsmodul 35 weitergeleitet, wo entsprechend dem eingegebenen Befehl bestimmte Funktionen ausgeführt werden. Generell werden in diesem Ausführungsbeispiel spezielle Dienste vorzugsweise gemäss dem SICAP Verfahren, welches unter anderem in EP 689 368 beschriebenen worden ist, oder gemäss einem ähnlichen Verfahren ausgeführt. Neben einem Code zur Identifizierung des speziellen Dienstes zur Verwaltung von kundenspezifischen Informationen (in der untenstehenden Tabelle als Value Added Service Key <vasKey> bezeichnet) umfasst die spezielle Kurzmeldung beispielsweise einen weiteren Code zur Identifizierung des betreffenden Befehls sowie ein oder mehrere Argumente für die Ausführung des betreffenden Befehls. Die untenstehende Tabelle zeigt als Beispiel eine Übersicht und den möglichen Aufbau der über das Mobilgerät 9 eingegebenen und an das Informationssystem 3 übermittelten Befehle.

| Beschreibung der Funktion | Spezieller Dienstcode | Befehlscode | Argumente |
|---|---|---|---|
| Registrieren | <vasKey> | <cmdlnit> | |
| Passwort ändern | <vasKey> | <cmdChPwd> | Altes Passwort, Neues Passwort |
| Eintrag Löschen | <vasKey> | <cmdDelete> | Eintragsnummer |
| Eintrag ändern | <vasKey> | <cmdChange> | Eintragsnummer, Rufnummer, Text |
| Eintrag einfügen | <vasKey> | <cmdlnsert> | Rufnummer, Text |
| Aktiven Satz laden | <vasKey> | <cmdLoad> | |
| Privaten Satz laden | <vasKey> | <cmdLoad> | Satzname |
| Gruppen (CUG) Satz laden | <vasKey> | <cmdLoadCug> | Gruppen Identifizierung, Satzname |

Der Kunde kann somit direkt von seinem Endgerät 9 aus kundenspezifische Informationen im betreffenden Speicherplatz auf der Datenbank 36 verwalten oder einen bestimmten Satz von kundenspezifischen Informationen zum Laden auf seine Identifikationskarte 91 anfordern, entweder einen privaten, den er verwaltet, oder einen gruppenspezifischen, für den er eine Ladeberechtigung hat.

Entsprechend dem vom Kunden über das Endgerät 9 eingegebenen Befehl, respektive der im Verwaltungsmodul 35 ausgeführten entsprechenden Funktion, werden auch die auf der Identifikationskarte 91 gespeicherten kundenspezifischen Informationen aktualisiert. Zum Beispiel wird der gesamte veränderte oder angeforderte Satz von kundenspezifischen Informationen von der Datenbank 36 auf die Identifikationskarte 91 geladen, wo der vorher gespeicherte Satz überschrieben wird. In einer Ausführungsvariante werden nur die veränderten Einträge in einem Satz von kundenspezifischen Informationen auf die Identifikationskarte 91 geladen. Die betreffende Funktion im Verwaltungsmodul 35, die den Befehl ausführt, überträgt die aktualisierten Informationen, beispielsweise mittels speziellen Kurzmeldungen wie SMS oder USSD, über ein Kommunikationsnetz, beispielsweise über ein Mobilfunknetz 8, insbesondere über ein GSM-Netz oder ein UMTS-Netz, auf die sich im Endgerät 9, beispielsweise in einem Mobilgerät 9, insbesondere in einem Mobilfunktelefon, befindende Identifikationskarte 91, beispielsweise eine SIM-Karte. Die Übertragung wird beispielsweise über das SSC 34 ausgeführt, wobei das SSC 34 eine (oder mehrere) spezielle Kurzmeldung(en) aufsetzt und die aktualisierten Informationen über das Mobilnetz 8 auf die Identifikationskarte 91 im Endgerät 9 übermittelt, welche über entsprechende spezielle Dienste für den Empfang und die Abspeicherung der aktualisierten kundenspezifischen Informationen verfügt. Dies kann wiederum gemäss dem oben erwähnten SICAP-Verfahren ausgeführt werden. In einem anderen Beispiel werden die kundenspezifischen Informationen via den Web-Server 32 über das Internet 2, oder ein anderes Kommunikationsnetz, auf eine Identifikationskarte geladen, die sich im Endgerät 1 befindet.

Es kann vorgesehen werden, dass mindestens gewisse auf der Identifikationskarte 91 gespeicherte kundenspezifische Informationen, beispielsweise diejenigen, die in einem vordefinierten Adressbereich der Identifikationskarte 91 gespeichert sind, nicht über das Kommunikationsnetz 2, 8 überschrieben werden können. Ein solcher Überschreibschutz kann nützlich sein, wenn die betreffenden kundenspezifischen Informationen nur lokal auf der Identifikationskarte 91 aber nicht in der Datenbank 36 gespeichert sind und von einem Laden eines ganzen Satzes von kundenspezifischen Informationen nicht überschrieben werden sollen. Ein solcher Überschreibschutz kann beispielsweise vom Betreiber des Informationssystems 3 vorgesehen werden und/oder er kann individuell von Kunden auf deren Identifikationskarten 91, beispielsweise über die Eingabemittel 92 des Endgeräts 9 oder über die oben beschriebenen Internetdienste, gesetzt werden.

In einer Ausführungsvariante können kundenspezifische Informationen, die ohne Abspeicherung in der zentralen Datenbank auf der Identifikationskarte gespeichert wurden, beispielsweise nur lokal im betreffenden Endgerät 9 ohne Zuhilfenahme des beschriebenen Verfahrens, nachträglich in die Datenbank 36 geladen werden. Ein entsprechender Dienst kann beispielsweise vom Kunden mittels der oben beschriebenen Internetdienste oder mittels über das Endgerät 9 eingegebenen Befehlen angefordert werden. Ein solcher Dienst kann aber auch zu Backup-Zwecken beispielsweise vom Informationssystem 3 automatisch und beispielsweise periodisch initiiert und ausgeführt werden und kann sämtliche auf der Identifikationskarte gespeicherten Daten erfassen. Der Dienst wird beispielsweise so ausgeführt, dass eine entsprechende Funktion im Verwaltungsmodul 35 kundenspezifische Informationen (oder sämtliche dort gespeicherten Daten) direkt von den sich in Endgeräten 9 befindenden Identifikationskarten 91 über ein Kommunikationsnetz anfordert und in der Datenbank 36 abspeichert. Vor der Abspeicherung in der Datenbank 36 können die kundenspezifischen Informationen beispielsweise zuerst dem Kunden mittels der Internetdienste angezeigt werden und vom Kunden selektiert und/oder editiert werden. Die kundenspezifischen Informationen können beispielsweise von der sich in einem Mobilgerät 9 befindenden SIM-Karte mittels speziellen Kurzmeldungen, zum Beispiel SMS- oder USSD- Meldungen, beispielsweise gemäss dem oben erwähnten SICAP-Verfahren über das SSC 34 und über ein GSModer UMTS-Netz angefordert und übertragen werden.

Als Beispiele von kundenspezifischen Informationen sollen hier, vor allem im Zusammenhang von Kommunikationsendgeräten 9, insbesondere im Zusammenhang von mobilen Kommunikationsendgeräten, Telefonnummern, und Namen erwähnt werden, wobei beispielsweise aber auch URL-Internet-Adressen (Uniform Resource Locator), Post- oder Wohnortadressen als kundenspezifische Informationen abgespeichert werden können. Es können aber durchaus auch andere kundenspezifische Informationen wie kundenspezifische biometrische Schlüssel für Authentifizierungszwecke, Benutzerprofile, vorausbezahlte Geldbeträge, oder auch Dateien und Programme für spezielle Dienste im beschriebenen Verfahren und Informationssystem einbezogen werden. Vor allem im Zusammenhang mit generischen Identifikationskarten (Open Cards), das heisst Chip-Karten oder Smartcards mit enthaltener Identifizierung des Benutzers, welche in mehreren Systemen, beispielsweise in Systemen der Mobilfunktelefonie, Systemen für Bargeldbezug von Bankautomaten, in Kreditkartensystemen, in Systemen für elektronische Zahlungsmittel, in Zutrittskontrollsystemen für Bahnen, Gebäude oder verschiedene Kommunikationsnetzwerke, oder in anderen Systemen und in verschiedenen Endgeräten benutzt werden können gibt es weitere kundenspezifische Informationen, beispielsweise verschiedene Identifikationsnummem des Benutzers für die verschiedenen Systeme oder andere kundenspezifische Systemparameter, die alle mit dem hier beschriebenen Verfahren und Informationssystem in Speicherplätzen des Kunden auf der Datenbank 36 gesichert abgespeichert und bei Bedarf über ein Mobilfunknetz 8 oder ein Fixnetz 2 auf eine SIM-Karte in einem mobilen oder fixen Endgerät 1, 9 geladen werden können. Die beschriebenen Verfahren und Informationssysteme ermöglichen also einen vollständigen Backup einer Identifikationskarte, der beispielsweise beim Verlust einer solchen Karte, wie oben beschrieben, auf eine neue Ersatzkarte geladen werden kann.

Es kann auch vorteilhaft sein, dass gewisse in der Datenbank 36 gespeicherte kundenspezifische Informationen auf Initiative des Informationssystems 3, beispielsweise bezüglich den aktuellen Werten von entsprechenden Informationen in einem Kommunikationssystem, aktualisiert werden. Das Informationssystem 3 benötigt dafür natürlich Zugang auf diese aktuellen Werte, zum Beispiel durch Zugriff auf die entsprechenden Datenbanken des betreffenden Kommunikationssystems oder auf lokale Kopien oder Auszüge der aktuellen Werte, für welche das betreffende Kommunikationssystem zum Beispiel dem Informationssystem 3 jeweils neue aktuelle Werte periodisch oder jeweils unmittelbar nach einer Änderung übermittelt. Beispielsweise können Änderungen von Rufnummern in einem Kommunikationsnetzwerk, beispielsweise in einem Mobilfunknetz 8 und/oder in einem Fixnetz, zum Beispiel wegen Umzug von Kunden oder infolge einer Umnummerierung im Netz, dem Informationssystem 3 übermittelt oder zugänglich gemacht werden und von einem dafür verantwortlichen Prozess im Verwaltungsmodul 35 entsprechend auf die kundenspezifischen Informationen in der Datenbank 36 übertragen werden, indem dort die entsprechenden gespeicherten Rufnummern aktualisiert werden. Zudem könnten in einer entsprechenden Variante beispielsweise auch URL-Internet-Adressen aktualisiert werden, die sich zum Beispiel seit dem letzten Zugriff des Kunden verändert haben. Offensichtlich hat dies den Vorteil, dass die Kunden solche Änderungen von Rufnummern oder URL-Adressen nicht selber aktualisieren müssen, was natürlich besonders vorteilhaft ist, wenn diese aktualisierten Informationen von einem entsprechenden Dienst auf die Identifikationskarten 91 der entsprechenden Kunden übertragen werden.

Für die Verrechnung der oben beschriebenen Dienste, beispielsweise der beschriebenen Verwaltungsdienste oder die Benutzung von Speicherplatz in der Datenbank 36 steht dem Verwaltungsmodul 35 ein Gateway 37 zur Verfügung, mittels welchem er gesichert auf die Gebührenerfassungsdienste 10 zugreifen kann. Dies hat den Vorteil, dass sämtliche dieser beschriebenen Dienste einem Kunden, der diese Dienste benützt hat, verrechnet werden können, indem die Dienste über den Gateway 37 beispielsweise Call Data Records (CDR) an die Gebührenerfassungsdienste 10 übermitteln, basierend auf welche durch die Gebührenerfassungsdienste 10 Gebühren berechnet und beispielsweise in die Standardrechnung des betreffenden Kunden integriert oder separat verrechnet werden.

Es bleibt zu erwähnen, dass der Austausch von Daten zwischen dem Informationssystem 3 und den Endgeräten 1, 9 der Kunden vorzugsweise unter Zuhilfenahme von Sicherheitsdiensten, beispielsweise mittels TTP (Trusted Third Party) oder einem entsprechenden Verfahren, erfolgt, um die Vertraulichkeit, die Authentizität, die Nichtabstreitbarkeit des Ursprungs und die Integrität der Daten und vor allem auch die Authentizität des betreffenden Senders, das heisst des Kunden oder des Informationssystems, zu gewährleisten.

## Patentansprüche

1. Verfahren, um auf Identifikationskarten (91), die als SIM-Karten ausgeführt sind, kundenspezifische Informationen, die Rufnummern in einem Kommunikationsnetz, Namen, URL-Adressen in einem Kommunikationsnetz, und/oder Post- oder Wohnortadressen umfassen, auf Initiative von Kunden zu speichern und zu verwalten,
wobei von Kunden Instruktionen mittels Eingabemitteln von Endgeräten eingegeben und über ein Kommunikationsnetz (2, 8) an ein Informationssystem (3) übertragen werden,
wobei die genannten kundenspezifischen Informationen vom genannten Informationssystem (3) erfasst und in für diesen Kunden zur Verfügung gestellten Speicherplätzen einer zentralen Datenbank (36) gespeichert werden, in welcher kundenspezifische Informationen für eine Vielzahl von Kunden gespeichert sind, wobei die genannten kundenspezifischen Informationen in der Datenbank (36) vom genannten Informationssystem (3) auf Grund der empfangenen Instruktionen eingefügt, selektiert, geändert oder gelöscht werden, und
wobei die genannten kundenspezifischen Informationen vom genannten Informationssystem (3) über ein Kommunikationsnetz (8) auf die sich in Endgeräten (9) befindenden genannten Identifikationskarten (91) übertragen werden.

2. Verfahren gemäss vorhergehendem Anspruch, **dadurch gekennzeichnet, dass** das genannte Informationssystem (3) die genannten kundenspezifischen Informationen von mindestens gewissen Kunden mittels Internetdiensten erfasst werden, und dass die genannten Instruktionen über das Internet (2) empfangen werden.

3. Verfahren gemäss einem der vorhergehenden Ansprüche, **dadurch gekennzeichnet, dass** die genannten Instruktionen in speziellen Kurzmeldungen über ein Mobilfunknetz (8) empfangen werden.

4. Verfahren gemäss einem der vorhergehenden Ansprüche, **dadurch gekennzeichnet, dass** das genannte Informationssystem (3) die genannten kundenspezifischen Informationen direkt von den genannten sich in Endgeräten (9) befindenden Identifikationskarten (91) über ein Kommunikationsnetz (8) erfasst.

5. Verfahren gemäss einem der vorhergehenden Ansprüche, **dadurch gekennzeichnet, dass** das genannte Informationssystem (3) die genannten kundenspezifischen Informationen mittels über ein Mobilfunknetz (8) übertragenen speziellen Kurzmeldungen direkt von den genannten sich in Mobilgeräten (9) befindenden Identifikationskarten (91) erfasst.

6. Verfahren gemäss einem der vorhergehenden Ansprüche, **dadurch gekennzeichnet, dass** das genannte Informationssystem (3) die genannten kundenspezifischen Informationen mittels über ein Mobilfunknetz (8) übertragenen speziellen Kurzmeldungen auf die genannten sich in Mobilgeräten (9) befindenden ldentifikationskarten (91) überträgt.

7. Verfahren gemäss einem der vorhergehenden Ansprüche, **dadurch gekennzeichnet, dass** mindestens gewisse der genannten kundenspezifischen Informationen privat sind und nur auf die genannten Identifikationskarten (91) des betreffenden Kunden übertragen und gespeichert werden.

8. Verfahren gemäss einem der vorhergehenden Ansprüche, **dadurch gekennzeichnet, dass** mindestens gewisse der genannten kundenspezifischen Informationen gruppenspezifisch sind und nur auf die genannten Identifikationskarten (91) der betreffenden Gruppe von Kunden übertragen und gespeichert werden.

9. Verfahren gemäss einem der vorhergehenden Ansprüche, **dadurch gekennzeichnet, dass** in der genannten Datenbank (36) für einen bestimmten Kunden mehrere Sätze von den genannten kundenspezifischen Informationen gespeichert und verwaltet werden, von welchen Sätzen jeweils einer in einer genannten Identifikationskarte (91) dieses Kunden gespeichert wird.

10. Verfahren gemäss vorhergehendem Anspruch, **dadurch gekennzeichnet, dass** ein genannter Satz von den genannten kundenspezifischen Informationen, der zur Speicherung auf eine genannte Identifikationskarte (91) übertragen werden soll, vom Kunden mittels der genannten Instruktionen selektiert wird.

11. Verfahren gemäss einem der Ansprüche 2 bis 10, **dadurch gekennzeichnet, dass** ein Kunde sich beim genannten Informationssystem (3) mit seiner Rufnummer registriert, und dass einem registrierenden Kunden ein Passwort und eine URL-Adresse über ein Kommunikationsnetz (8) übermittelt wird, mittels welchen er die genannten Internetdienste benutzt.

12. Verfahren gemäss einem der vorhergehenden Ansprüche, **dadurch gekennzeichnet, dass** das genannte Informationssystem (3) Angaben über die Benutzung des Informationssystems (3) durch betreffende Kunden an Gebührenerfassungsdienste (10) weiterleitet.

## Claims

1. Method for client-directed storage and management of client-specific information on identification cards (91), which are implemented as SIM-cards, including calling numbers in a communications network, names, URL-addresses in a communications network and/or postal or street addresses,
wherein instructions are entered by clients by means of input means of terminals and are transmitted over a communications network (2, 8) to an information system (3),
wherein said client specific-information is captured by said information system (3) and stored in memory areas of a central database (36) allocated for this client, in which database client-specific information is stored for a multitude of users, said client-specific information being inserted, selected, altered or deleted in the database (36) by said information system (3) on the basis of the received instructions, and
wherein said client-specific information is transmitted by said information system (3) over a communications network (8) to said identification cards (91) located in terminals (9).

2. Method according to the preceding claim, **characterized in that** said information system (3) captures said client-specific information from at least certain users by means of Internet services, and that said instructions are received over the Internet.

3. Method according to one of the preceding claims, **characterized in that** said instructions are received over a mobile radio network (8) in special short messages.

4. Method according to one of the preceding claims, **characterized in that** said information system (3) captures said client-specific information directly from said identification cards (91) located in terminal devices (9) over of a communications network (8).

5. Method according to one of the preceding claims, **characterized in that** said information system (3) captures said client-specific information by means of special short messages transmitted over a mobile radio network (8) directly from said identification cards (91) located in terminals (9).

6. Method according to one of the preceding claims, **characterized in that** said information system (3) transmits said client-specific information by means of special short messages transmitted over a mobile radio network onto said identification cards (91) located in terminals (9).

7. Method according to one of the preceding claims, **characterized in that** at least certain of said client-specific information is private and is transmitted and stored only onto said identification cards (91) of the respective client.

8. Method according to one of the preceding claims, **characterized in that** at least certain of said client-specific information is group-specific and is transmitted and stored only onto said identification cards (91) of the respective group of clients.

9. Method according to one of the preceding claims, **characterized in that** for a certain client multiple sets of said client-specific information are stored and managed in said database (36), from which sets one at a time is stored in a said identifications card (91) of that client.

10. Method according to one of the preceding claims, **characterized in that** a said set of said client specific information to be transmitted for storage onto a said identification card (91) is selected by the client by means of said instructions.

11. Method according to one of the claims 2 to 10, **characterized in that** a client registers with the information system (3) with his calling number, and that a password and a URL-address is transmitted to a registering client over a communications network (8) by which means he uses said Internet service.

12. Method according to one of the preceding claims, **characterized in that** said information system (3) forwards data about the use of the information system (3) by respective users to fee registration services (10).

## Revendications

1. Procédé permettant, sur l'initiative de clients, de stocker et de gérer sur des cartes d'identification (91), réalisées sous la forme de cartes SIM, des renseignements spécifiques de ces clients, et comprenant des numéros d'appel dans un réseau de communications, des noms, des adresses URL dans un réseau de communications ou, ou bien les uns et les autres à la fois, des adresses postales ou géographiques,
les clients donnant des instructions grâce aux moyens d'entrée de terminaux et les transmettant à un système d'information (3) par l'intermédiaire d'un réseau de communications (2, 8),
les renseignements spécifiques des clients étant saisis par. le système d'information (3) mentionné et stockés dans des mémoires, mises à la disposition de ces clients, d'une banque de données centrale (36) dans laquelle les renseignements spécifiques des clients sont stockés pour un grand nombre de clients, le système d'information (3) introduisant, sélectionnant, modifiant ou effaçant ces renseignements, dans la banque de données (36), sur la base des instructions reçues, et
ce système d'information (3) transmettant les renseignements spécifiques des clients aux cartes d'identification (91), qui se trouvent dans des terminaux (9), par l'intermédiaire d'un réseau de communications (8).

2. Procédé selon la revendication précédente, **caractérisé en ce que** le système d'information (3) saisit au moyen de services Internet les renseignements spécifiques au moins de certains clients, et **en ce que** les instructions mentionnées sont reçues par Internet (2).

3. Procédé selon l'une des revendications précédentes, **caractérisé en ce que** les instructions sont reçues dans des messages courts spéciaux, par l'intermédiaire d'un réseau radio mobile (8).

4. Procédé selon l'une des revendications précédentes, **caractérisé en ce que** le système d'information (3) saisit les renseignements spécifiques des clients directement dans les cartes d'identification (91) se trouvant dans des terminaux (9), par l'intermédiaire d'un réseau de communications (8).

5. Procédé selon l'une des revendications précédentes, **caractérisé en ce que** le système d'information (3) saisit les renseignements spécifiques des clients directement dans les cartes d'identification (91) se trouvant dans des appareils mobiles (9), au moyen de messages courts spéciaux transmis par un réseau radio mobile (8).

6. Procédé selon l'une des revendications précédentes, **caractérisé en ce que** le système d'information (3) transmet les renseignements spécifiques des clients aux cartes d'identification (91) se trouvant dans des appareils mobiles (9), au moyen de messages courts spéciaux transmis par un réseau radio mobile (8).

7. Procédé selon l'une des revendications précédentes, **caractérisé en ce qu'**au moins certains des renseignements spécifiques du client sont de caractère privé et ne sont transmis et mis en mémoire que sur les cartes d'identification (91) du client considéré.

8. Procédé selon l'une des revendications précédentes, **caractérisé en ce qu'**au moins certains des renseignements spécifiques des clients sont spécifiques d'un groupe et ne sont transmis et mis en mémoire que sur les cartes d'identification (91) du groupe considéré de clients.

9. Procédé selon l'une des revendications précédentes, **caractérisé en ce que**, dans la banque de données (36), plusieurs jeux des renseignements spécifiques du client sont mis en mémoire et gérés popur un client déterminé, l'un de ces jeux étant mis en mémoire sur une carte d'identification (91) de ce client.

10. Procédé selon la revendication précédente, **caractérisé en ce que** le client sélectionne, au moyen des instructions mentionnées, un jeu des renseignements spécifiques du client, qui doit être transmis sur une carte d'identification (91) pour mise en mémoire.

11. Procédé selon l'une des revendications 2 à 10, **caractérisé en ce qu'**un client s'inscrit auprès du système d'information (3) avec son numéro d'appel et qu'un mot de passe et une adresse URL sont communiqués à un client qui s'inscrit, par l'intermédiaire d'un réseau de communications (8) au moyen duquel il utilise les services d'lntemet.

12. Procédé selon l'une des revendications précédentes, **caractérisé en ce que** le système d'information (3) transmet à des services de saisie de redevances (10) des renseignements sur l'utilisation de ce système d'information (3) par des clients considérés.
